# EUROPEAN PATENT APPLICATION

(11) **EP 4 322 024 A1**
(43) Date of publication of application: **14.02.2024**
(21) Application number: 21935781.1
(22) Date of filing: 09.10.2021
(51) Int. Cl.: G06F 16/29, G06F 16/23, G08G 1/16, G08G 1/01, G08G 1/0967

(54) **MAP UPDATING METHOD AND DEVICE**

(30) Priority: 09.04.2021 CN 202110387502
(71) Applicant: CM Intelligent Mobility Network Co., Ltd., Shanghai 201206 (CN); China Mobile Shanghai ICT Co., Ltd, Shanghai 201206 (CN); CHINA MOBILE COMMUNICATIONS GROUP CO., LTD., Beijing 100032 (CN)
(72) Inventor: LI, Sen, Shanghai 201206 (CN); MA, Kun, Shanghai 201206 (CN); PEI, Junlong, Shanghai 201206 (CN)
(74) Representative: GPI Brevets
(86) International application number: PCT/CN2021/122858
(87) International publication number: WO 2022/213563

(57) **Abstract**

A map updating method, a map updating device and a readable storage medium are provided which can shorten a map updating period and has high instantaneity. The method includes: receiving road traffic information collected and sent by a vehicle-end device and/or a roadside device; updating a regional map corresponding to a jurisdiction area of an edge network device according to the road traffic information; sending the updated regional map to a core network device and/or a roadside devices in the jurisdiction area of the edge network device.

## Description

### CROSS-REFERENCE TO RELATED APPLICATION

This application is filed based on and claims the priority from the Chinese patent application No. 202110387502.4 filed on April 9, 2021, the disclosure of which is incorporated herein by reference in its entirety.

### TECHNICAL FIELD

The present application relates to the technical field of smart transportation, and in particular, to a map updating method and a map updating device.

### BACKGROUND

According to prediction, to 2040 years, a proportion of an intelligent traffic travel service provider in respect of the PKMT (a total number of miles of passengers divided according to vehicle types) is up to 55%, and a scale of an automatic driving market in 2025 years is expected to be more than 3000 billion Chinese Yuan. An automatic driving automobile becomes an important carrier of an emerging business, and has a large market value around emerging business modes such as data value-added, shared travel, collaborative management and the like of an automobile. However, a private self-driving vehicle only accounts for 11%, promotion of automatic driving will increase together with travel services, and a high-precision map, as rigid requirement of a high-precision positioning technology, is one of key capabilities for realizing automatic driving, becomes an effective supplement to an automatic-driving related sensor, and provides safer and more reliable perception capability and driving experience for a vehicle. Compared with a traditional navigation electronic map, the high-precision map serving the automatic driving has higher requirements in various aspects, and can cooperate with a sensor and an algorithm to provide support for the decision-making layer.

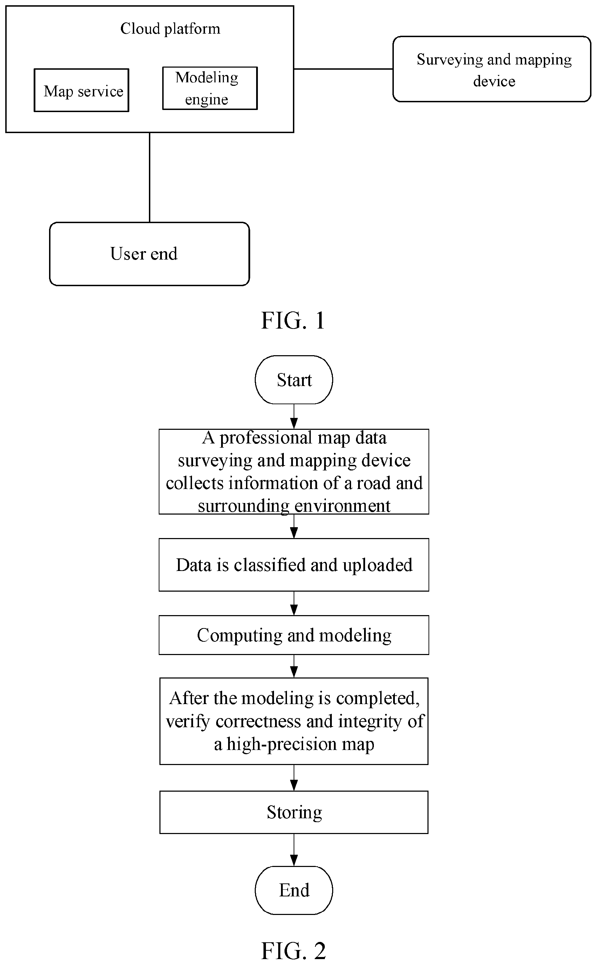

A traditional solution (see FIG. 1) in the related art generates a high-precision map by collecting original surveying and mapping data by means of a surveying and mapping device, uploading the original surveying and mapping data to a cloud platform for map modeling, and then output a map service outwards. Storage and distribution of a huge amount of data for the high-precision map restrict instantaneity and effectiveness of the traditional solution. Updating the high-precision map adopts the same way. Such a traditional high-precision map updating method basically adopts a full-amount construction mode has a long period of updating the high-precision map, and is incapable of reflecting a road state and a related change in real time.

### SUMMARY

In view of the above, embodiments of the present application provide a map updating method and a map updating device.

In order to solve related technical problems, in a first aspect, an embodiment of the present application provides a map updating method performed by an edge network device. The method includes:
receiving road traffic information collected and sent by one or more vehicle-end devices and/or one or more roadside devices;
updating a regional map corresponding to a jurisdiction area of the edge network device according to the road traffic information;
sending the updated regional map to a core network device and/or one or more roadside devices in the jurisdiction area of the edge network device.

In the above solution, updating the regional map corresponding to the jurisdiction area of the edge network device according to the road traffic information includes:
updating a base layer in the regional map according to road static information and/or road surrounding static information in the road traffic information.

In the above solution, updating the regional map corresponding to the jurisdiction area of the edge network device according to the road traffic information includes:
updating an event layer in the regional map according to event information in the road traffic information.

In the above solution, before receiving the road traffic information collected and sent by the one or more vehicle-end devices and/or the one or more roadside devices, the method further includes:
receiving a regional map, corresponding to the jurisdiction area of the edge network device, sent by a core network device;
sending a unit map, in the regional map, corresponding to a jurisdiction area of a roadside device to the roadside device.

In the above solution, the method further includes:
receiving a regional map, corresponding to the jurisdiction area of the edge network device, sent by the core network device after the core network device updates a global map according to road static information and/or road surrounding static information collected by a map data collection device.

In a second aspect, an embodiment of the present application further provides a map updating method performed by a core network device. The method includes:
receiving one or more updated regional maps sent by one or more edge network devices, wherein each regional map is a map corresponding to a jurisdiction area of one of the one or more edge network devices, and the one or more updated regional maps are updated according to road traffic information collected and sent by one or more vehicle-end devices and/or one or more roadside devices;
updating a global map according to the received one or more updated regional maps.

In the above solution, at least one of the one or more updated regional maps includes a base layer updated according to road static information and/or road surrounding static information in the road traffic information.

In the above solution, before receiving the one or more updated regional maps sent by the one or more edge network devices, the method further includes:
constructing an initial global map;
sending a regional map, in the initial global map, corresponding to a jurisdiction area of an edge network device to the edge network device.

In the above solution, the method further includes:
updating the global map according to road static information and/or road surrounding static information collected by a map data collection device;
sending a regional map, in the updated global map, corresponding to a jurisdiction area of an edge network device to the edge network device.

In a third aspect, an embodiment of the present application further provides a map updating method performed by a roadside device. The method includes:
sending, to an edge network device, road traffic information collected by one or more vehicle-end devices and/or the roadside device, wherein the edge network device updates a regional map corresponding to a jurisdiction area of the edge network device according to the road traffic information.

In the above solution, the regional map includes an event layer, the method further includes:
receiving an updated event layer, wherein the updated event layer is obtained by updating the event layer in the regional map by the edge network device according to event information in the road traffic information reported by one or more roadside devices and/or one or more vehicle-end devices in a jurisdiction area of the edge network device;
broadcast the updated event layer to one or more vehicle-end devices.

In the above solution, before sending, to the edge network device, the road traffic information collected by the one or more vehicle-end devices and/or the roadside device, the method further includes:
receiving a unit map sent by the edge network device, wherein the unit map is a partial map corresponding to a jurisdiction area of the roadside device in the regional map corresponding to the jurisdiction area of the edge network device.

In a fourth aspect, an embodiment of the present application further provides an edge network device. The device includes:
a road traffic information receiving module, configured to receive road traffic information collected and sent by one or more vehicle-end devices and/or one or more roadside devices;
a first updating module, configured to update a regional map corresponding to a jurisdiction area of the edge network device according to the road traffic information;
a first sending module, configured to send the updated regional map to a core network device and/or one or more roadside devices in the jurisdiction area of the edge network device.

In the above solution, the first updating module includes:
a first updating unit, configured to update a base layer in the regional map according to road static information and/or road surrounding static information in the road traffic information.

In the above solution, the first updating module includes:
a second updating unit, configured to update an event layer in the regional map according to event information in the road traffic information.

In the above solution, the edge network device further includes:
a second receiving module, configured to receive a regional map, corresponding to the jurisdiction area of the edge network device, sent by a core network device;
a first distribution module, configured to send a unit map, in the regional map, corresponding to a jurisdiction area of a roadside device to the roadside device.

In the above solution, the edge network device further includes:
a third receiving module, configured to receive a regional map, corresponding to the jurisdiction area of the edge network device, sent by the core network device after the core network device updates a global map according to road static information and/or road surrounding static information collected by a map data collection device.

In a fifth aspect, an embodiment of the present application further provides a core network device. The device includes:
a first receiving module, configured to receive one or more updated regional maps sent by one or more edge network devices, wherein each regional map is a map corresponding to a jurisdiction area of one of the one or more edge network devices, and the one or more updated regional maps are updated according to road traffic information collected and sent by one or more vehicle-end devices and/or one or more roadside devices;
a second updating module, configured to update a global map according to the received one or more updated regional maps.

In the above solution, at least one of the one or more updated regional maps includes a base layer updated according to road static information and/or road surrounding static information in the road traffic information.

In the above solution, the core network device further includes:
an initial construction module, configured to construct an initial global map;
a second distribution module, configured to send a regional map, in the initial global map, corresponding to a jurisdiction area of an edge network device to the edge network device.

In the above solution, the core network device further includes:
a third updating module, configured to update the global map according to road static information and/or road surrounding static information collected by a map data collection device;
a third distribution module, configured to send a regional map, in the updated global map, corresponding to a jurisdiction area of an edge network device to the edge network device.

In a sixth aspect, an embodiment of the present application further provides a roadside device. The device includes:
a road traffic information sending module, configured to send, to an edge network device, road traffic information collected by one or more vehicle-end devices and/or the roadside device, wherein the edge network device updates a regional map corresponding to a jurisdiction area of the edge network device according to the road traffic information.

In the above solution, the regional map includes an event layer, and the roadside device further includes:
a fourth receiving module, configured to receive an updated event layer, wherein the updated event layer is obtained by updating the event layer in the regional map by the edge network device according to event information in the road traffic information reported by one or more roadside devices and/or one or more vehicle-end devices in a jurisdiction area of the edge network device;
a broadcast module, configured to broadcast the updated event layer to one or more vehicle-end devices.

In the above solution, the roadside device further includes:
a fifth receiving module, configured to receive a unit map sent by the edge network device, wherein the unit map is a partial map corresponding to a jurisdiction area of the roadside device in the regional map corresponding to the jurisdiction area of the edge network device.

In a seventh aspect, an embodiment of the present application further provides an edge network device. The device includes: a transceiver and a processor;
the transceiver is configured to receive road traffic information collected and sent by one or more vehicle-end devices and/or one or more roadside devices;
the processor is configured to update a regional map corresponding to a jurisdiction area of the edge network device according to the road traffic information;
the transceiver is further configured to send the updated regional map to a core network device and/or one or more roadside devices in the jurisdiction area of the edge network device.

In the above solution, the processor is configured to update the base layer in the regional map according to the road static information and/or road surrounding static information in the road traffic information.

In the above solution, the processor is configured to update an event layer in the regional map according to event information in the road traffic information.

In the above solution, the transceiver is further configured to receive a regional map, corresponding to the jurisdiction area of the edge network device, sent by a core network device; the transceiver is further configured to send a unit map, in the regional map, corresponding to a jurisdiction area of a roadside device to the roadside device.

In the above solution, the transceiver is further configured to receive a regional map, corresponding to the jurisdiction area of the edge network device, sent by the core network device after the core network device updates a global map according to road static information and/or road surrounding static information collected by a map data collection device.

In an eighth aspect, an embodiment of the present application further provides a core network device. The core network device includes: a transceiver and a processor; wherein the transceiver is configured to receive one or more updated regional maps sent by one or more edge network devices, wherein each regional map is a map corresponding to a jurisdiction area of one of the one or more edge network devices, and the one or more updated regional maps are updated according to road traffic information collected and sent by one or more vehicle-end devices and/or one or more roadside devices; the processor is configured to update a global map according to the received one or more updated regional maps.

In the above solution, at least one of the one or more updated regional maps includes a base layer updated according to road static information and/or road surrounding static information in the road traffic information.

In the above solution, the processor is further configured to construct an initial global map; the transceiver is further configured to send a regional map, in the initial global map, corresponding to a jurisdiction area of an edge network device to the edge network device.

In the above solution, the processor is further configured to update the global map according to road static information and/or road surrounding static information collected by a map data collection device; the transceiver is further configured to send a regional map, in the updated global map, corresponding to a jurisdiction area of an edge network device to the edge network device.

In a ninth aspect, the present application further provides a roadside device. The roadside device includes: a transceiver and a processor, wherein the transceiver is configured to send, to an edge network device, road traffic information collected by one or more vehicle-end devices and/or the roadside device, wherein the edge network device updates a regional map corresponding to a jurisdiction area of the edge network device according to the road traffic information.

In the above solution, the regional map includes an event layer; the transceiver is further configured to receive an updated event layer, wherein the updated event layer is obtained by updating the event layer in the regional map by the edge network device according to event information in the road traffic information reported by one or more roadside devices and/or one or more vehicle-end devices in a jurisdiction area of the edge network device; the transceiver is further configured to broadcast the updated event layer to one or more vehicle-end devices.

In the above solution, the transceiver is further configured to receive a unit map sent by the edge network device, wherein the unit map is a partial map corresponding to a jurisdiction area of the roadside device in the regional map corresponding to the jurisdiction area of the edge network device.

In a tenth aspect, an embodiment of the present application further provides an edge network device. The device includes: a memory, a processor, and a program stored on the memory and executable by the processor, wherein the processor implements steps in any map updating method performed by an edge network device when executing the program.

In an eleventh aspect, an embodiment of the present application further provides a core network device. The core network device includes: a memory, a processor, and a program stored on the memory and executable by the processor; and the processor implements the steps in any map updating method performed by the core network device when executing the program.

In a twelfth aspect, an embodiment of the present application further provides a roadside device. The roadside device includes: a memory, a processor, and a program stored on the memory and executable by the processor; and the processor implements the steps in any map updating method performed by the roadside device when executing the program.

In a thirteenth aspect, an embodiment of the present application further provides a readable storage medium on which a program is stored, and when the program is executed by a processor, the steps in any one of the map updating methods are implemented.

The beneficial effects of the above technical solutions of the present application are as follows.

The map updating method provided by the embodiments of the present application, the edge network device updates the regional map in the jurisdiction area of the edge network device according to the road traffic information collected by the vehicle-end device and/or the roadside device, unlike conventional map updating in which map data in the global range is collected by using a professional map data surveying and mapping device and a global map is constructed by using a full-amount construction method. Since the vehicle-end device and/or the roadside devices can collect road traffic information in real time, the data collection period is short. In addition, the regional map is updated, so that a calculation cost of the updating can be reduced, the updating period is short, and the map instantaneity is high. In addition, based on the vehicle-road cooperation scene, diversified road traffic information is obtained from the vehicle-end devices and/or the roadside devices, the cost of map data collection can be reduced, and the difficulty and the cost of later updating, operation and maintenance of the map are reduced. At least the problem that the high-precision map updating mode in the related art has a long updating period and is incapable of reflecting the road state and related changes in real time can be at least solved.

### BRIEF DESCRIPTION OF THE DRAWINGS

FIG. 1 is a schematic diagram of a traditional map construction and usage architecture;
FIG. 2 is a flowchart of a traditional map construction process;
FIG. 3 is a flowchart of a traditional map usage process;
FIG. 4 is a schematic flowchart of a first map updating method according to some embodiments of the present application;
FIG. 5 is a schematic flowchart of a second map updating method according to some embodiments of the present application;
FIG. 6 is a schematic flowchart of an initial global map construction process according to some embodiments of the present application;
FIG. 7 is a schematic flowchart of a third map updating method according to some embodiments of the present application;
FIG. 8 is a schematic flowchart of an overall map update process according to some embodiments of the present application;
FIG. 9 is a schematic diagram of a map system architecture according to some embodiments of the present application;
FIG. 10 is a schematic structural diagram of a first edge network device according to some embodiments of the present application;
FIG. 11 is a schematic structural diagram of a first core network device according to some embodiments of the present application;
FIG. 12 is a schematic structural diagram of a first roadside device according to some embodiments of the present application;
FIG. 13 is a schematic structural diagram of a second edge network device according to some embodiments of the present application;
FIG. 14 is a schematic structural diagram of a second core network device according to some embodiments of the present application;
FIG. 15 is a schematic structural diagram of a second roadside device according to some embodiments of the present application;
FIG. 16 is a schematic structural diagram of a third edge network device according to some embodiments of the present application;
FIG. 17 is a schematic structural diagram of a third core network device according to some embodiments of the present application;
FIG. 18 is a schematic structural diagram of a third roadside device according to some embodiments of the present application.

### DETAILED DESCRIPTION

In order to make the objectives, technical solutions and advantages of the embodiments of this application clearer, the technical solutions of the embodiments of this application will be clearly and completely described below with reference to the accompanying drawings of the embodiments of this application. Obviously, the described embodiments are part, rather than all, of the embodiments of the present application. All other embodiments obtained by a person of ordinary skill in the art based on the described embodiments of the present application fall within the protection scope of the present application.

Referring to FIG. 2, a traditional high-precision map modeling process is as follows:
1. A professional map data surveying and mapping device collects data of roads and surrounding environment by means of a radar, a camera and a positioning device, and the professional map data surveying and mapping device may be in a vehicle form, an unmanned aerial vehicle form, etc. and the map data surveying and mapping device may also be a satellite.
2. The collected data is classified and uploaded to a professional map modeling processing server.
3. The processing server needs to calculate a position of an object outside the road and models the road and the object on the road by combining the collected data and a video with a global positioning system (GPS, Global Positioning System).
4. After the modeling is completed, it is necessary to verify correctness and integrity of a high-precision map by considering the original video and the GPS.
5. Finally, the map is stored in a server for subsequent use.

The updating process of the traditional high-precision map is basically consistent with the modeling process described above.

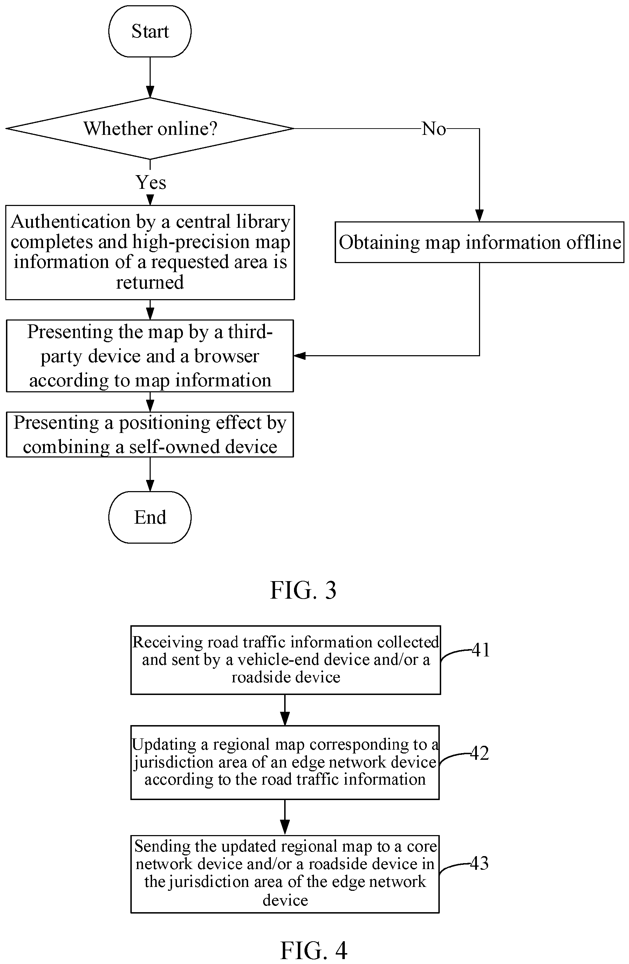

Referring to FIG. 3, a flow of using the traditional high-precision map is as follows:
1. A user obtains high-precision map information of an area where the user is located in an online (downloading from a central library) or offline manner.
2. A custom-defined system is accessed.
3. Presentation of the high-precision map is performed according to self-owned positioning information and requirements of an interactive terminal.

It can be seen from the above description that the traditional high-precision map updating adopts a static global modeling method by using a single server, and the method needs to construct a large-scale data center, a result of which an updating cost is high, the updating period is long, and the requirement of the automatic driving vehicle for the real-time performance of the map cannot be met.

The embodiments of the present application provide the following map updating method, for addressing the problem of poor map instantaneity caused by a large data collection amount, a long period, and slow map updating in a traditional high-precision map update process.

Referring to FIG. 4, FIG. 4 is a schematic flowchart of a map updating method according to Embodiment 1 of the present application. The method is applied to an edge network device, and includes the following steps 41-43.

Step 41: receiving road traffic information collected and sent by a vehicle-end device and/or a roadside device.

The road traffic information includes information of traffic road surfaces and surrounding states, and may be specifically divided into road static information and/or road surrounding static information and event information.

Collection of road traffic information by a vehicle-end device and/or a roadside device may be performed in real time.

Step 42: updating a regional map corresponding to a jurisdiction area of the edge network device according to the road traffic information.

Step 43: sending the updated regional map to a core network device and/or a roadside device in the jurisdiction area of the edge network device. The roadside device may include another roadside device other than the roadside device, or may include the roadside device that sends the road traffic information in step 41.

In addition, the edge network device may further send the updated regional map to an edge network device adjacent to the jurisdiction area.

In the embodiments of the present application, the edge network device may be an edge cloud, or referred to as an edge cloud platform.

According to the map updating method provided by the embodiments of the invention, the edge network device updates the regional map in the jurisdiction area of the edge network device according to the road traffic information collected by the vehicle-end device and/or the roadside device, unlike updating of the traditional map in which map data in a global area is collected by utilizing a professional map data surveying and mapping device, a full-amount construction mode is used to construct a global map. Due to the fact that the vehicle-end device and/or the roadside device can collect road traffic information in real time, the data collection period is short. In addition, updating is performed on the regional map, so that the updating calculation cost can be reduced, the updating period is short, and the map instantaneity is high. In addition, based on the vehicle-road cooperation scene, diversified road traffic information is obtained from the vehicle-end device and the roadside device in the present application, in this way, the map data collection cost can be reduced, and the difficulty and the cost of later updating, operation and maintenance of the map are reduced.

The above-mentioned map updating method is described below.

In the embodiments of the present application, with regard to the collection of road traffic information, the roadside device can be used as a basis, and the vehicle-end device complementally collects a blind area of the roadside device, that is, the vehicle-end device and the road test device cooperate to complement each other, so that the map is updated in all directions, flawlessly, with full coverage, with high quality, and in real-time and effectively. In addition, for the information collected by both the vehicle-end device and the roadside device, better update quality and effect can be obtained due to various data sources in the map update process.

In an embodiment, the updating the regional map corresponding to the jurisdiction area of the edge network device according to the road traffic information includes:
updating a base layer in the regional map according to the road static information and/or the road surrounding static information in the road traffic information.

The base layer mainly includes some basic static information such as a road, a lane, an intersection, and the like.

The edge network device updates the base layer in the regional map, and the updating not only needs to be reported to the core network device to enable the core network device to update the global map, and may also be sent to the roadside device in the jurisdiction area. When the updated regional map is issued to the roadside device, the regional map can be divided into unit maps according to jurisdiction areas of roadside devices, and each unit map is issued to the corresponding roadside device.

In the embodiments of the present application, the road traffic information collected and sent by the vehicle-end device and/or the roadside device is divided into conventional information and event information according to emergency types, the conventional information may include common videos, GPS positioning data, traffic flow data, and the like, and the event information is alarm type information which affects traffic driving safety, for example, includes road surface icing information, road surface gathered-water information, road construction information, meteorological state information (heavy rain, fog), vehicle congestion information, traffic accidents, and the like. The edge network device determines the type of the road traffic information collected and sent by the vehicle-end device and/or the road-side device, and if the type of the road traffic information is the conventional information, the edge network device firstly stores the road traffic information, and immediately processes the event information if he type of the road traffic information is the event information.

Specifically, for non-event information, the edge network device periodically pulls map information stored in the roadside devices in the jurisdiction area, performs grid segmentation on the whole real environment, and calculates, according to longitude and latitude matching, whether each region needs to update the base layer, and if it is necessary to update (requirement for updating the base layer needs to meet: static nature, long term, traffic influence and the like), modeling, model splicing and replacement, verification and synchronous issuing are carried out, and meanwhile, the generated updated regional map is uploaded to the core network equipment.

In an embodiment, the updating the regional map corresponding to the jurisdiction area of the edge network device according to the road traffic information includes:
updating an event layer in the regional map according to the event information in the road traffic information.

In addition to the event information, the event layer may further include at least one of notification information, reminder information, and alarm information for a traffic participant, obtained according to the event information.

In the embodiments of the present application, the cycle at which the edge network device updates the base layer in the regional map based on the road traffic information collected by the vehicle-end device and/or the roadside device may be a short cycle taking one or more days as a unit or one or more hours as a unit, and updating the event layer is performed in real time.

Specifically, an artificial intelligence system may be introduced to analyze and determine the road traffic information collected by the vehicle-end device and/or the roadside device, identify the event information therein, perform more targeted updating, and greatly improve the map updating efficiency. The confidence of the artificial intelligence system and the accuracy of identifying the event information can be gradually improved through collection and model-training of a large quantity of experimental data. An information collection device (for example, a sensor) in the vehicle-end device and/or the roadside device may be a calibration device, so that data filtering can be carried out more purposefully during point cloud construction, and the efficiency and the success rate of updating and model construction of the map are improved.

Specifically, the edge network device may update the event layer in the regional map according to the type of the event, the influence range, and the severity.

In addition, the updated event layer needs to be issued to the roadside devices in the jurisdiction area of the edge network device in time. That is, the edge network device performs event analysis based on the road traffic information collected by the vehicle-end device and/or the roadside devices in the jurisdiction area of the edge network device, and performs event-reminding on the vehicle-end devices in the jurisdiction area of the edge network device.

In the embodiments of the present application, through the artificial intelligence system, the traffic environment, whether a state of a road surface changes or not and a influence level generated by the state of the road surface on the traffic participant can be identified from the road traffic information collected by the vehicle-end device and/or the roadside devices, and the different layers are updated and response of the different layers is made. After the edge network device completes construction of the updated regional map, data of the updated regional map is synchronized upwards and distributed downwards, and different levels of processing are performed based on a layer type, for example, the base layer can be synchronized upwards and distributed downwards and the updating cycle of the base layer is the longest, but the influence is maximum, and the event layer is only distributed downwards to the subscribing roadside device after being updated, and then broadcast to the vehicle-end device by the roadside device.

In an embodiment, before the receiving the road traffic information collected and sent by the vehicle-end device and/or the roadside device, the method may further include:
receiving a regional map corresponding to the jurisdiction area of the edge network device sent by the core network device, wherein the regional map is a partial map in a global map initially constructed by the core network device;
sending a unit map corresponding to a jurisdiction area of the roadside device in the regional map to the roadside device.

Here, traditional storage, distribution and synchronization of a map adopt a single global server or a cloud platform, and resource consumption and a time delay of data communication in different levels of an access network, a backbone network and a support network are ignored. It is only considered that the map server only distributes the map data to the vehicle end or only distributes the map data to the road end during map distribution and synchronization. Due to the fact that a memory capacity of the vehicle-end device is often small, massive data of the global map cannot be supported and stored, transmission of mass map data to the vehicle end needs an ultra-wide bandwidth and also brings the problem of long transmission time delay. Decoding/converting the mass map data into content which can be recognized by the automatic driving automobile also needs to consume large computing power, and brings unnecessary consumption to a driving behavior decision of the automatic driving automobile in the driving process.

In the embodiments of the present application, the global map is gradually decomposed into the regional maps and the unit maps according to a grid step by step based on the characteristics of the map mass data and the map low-delay requirement, by using multiple levels of grids and distributing layer by layer, and the regional maps and the unit maps are stored and distributed on the core network device, the edge network device and the roadside device respectively. As a result, the map distribution real-time performance and the scene application efficiency are greatly improved.

In an embodiment, the method may further include:
receiving a regional map corresponding to the jurisdiction area of the edge network device sent by the core network device after the core network device updates the global map according to the road static information and/or road surrounding static information collected by the map data collection device.

In other words, in the embodiments of the present application, not only the edge network device updates the regional map corresponding to the jurisdiction area of the edge network device based on the road traffic information collected by the vehicle-end device and/or the roadside devices, and then reports the update to the core network device for updating the global map, but also the core network device further updates the global map based on the road static information and/or road surrounding static information collected by the professional map data collection device. The update may be used as a supplement to map updating based on the road traffic information collected by the vehicle-end device and/or the roadside devices, so that the accuracy and comprehensiveness of map updating can be further improved. When the map is updated based on the road static information and/or road surrounding static information collected by the professional map data collection device, the updating may not be based on full data in a global range.

In the embodiments of the present application, the map may further include a dynamic layer (or referred to as a positioning layer), and is mainly configured to display dynamic position information of the traffic participant.

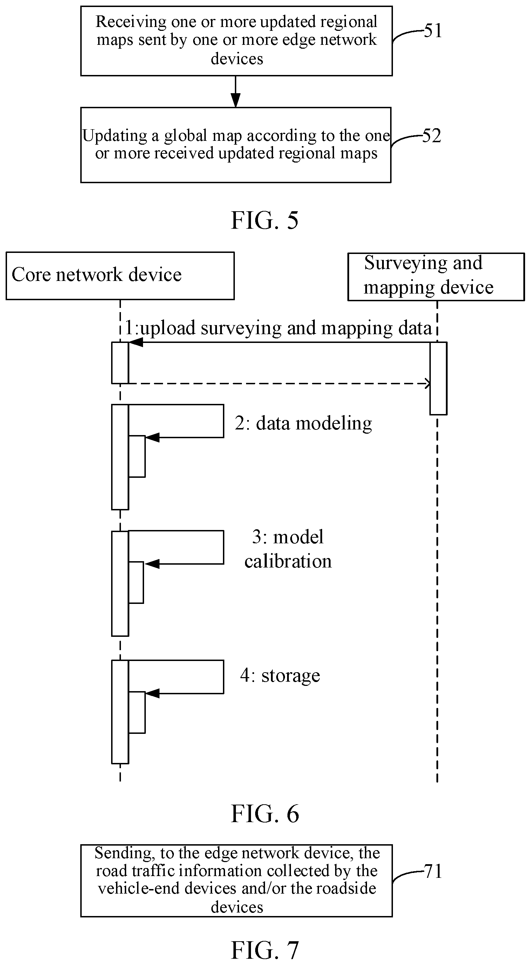

Referring to FIG. 5, FIG. 5 is a schematic flowchart of a map updating method according to Embodiment 2 of the present application. The method is applied to a core network device, and includes the following steps 51-52.

Step 51: receiving one or more updated regional maps sent by one or more edge network devices.

Each regional map is a map corresponding to a jurisdiction area of the edge network device, and the updated regional map is updated according to road traffic information collected and sent by the vehicle-end device and/or the roadside devices.

Step 52: updating the global map according to the one or more received updated regional maps.

The core network device may be a core cloud or a core cloud platform.

According to the map updating method provided in the embodiments of the present application, the edge network device updates the regional map in the jurisdiction area of the edge network device according to the road traffic information collected by the vehicle-end device and/or the roadside devices, and reports the regional map to the core network device after the updating, and the core network device updates the global map based on the updated regional map, unlike conventional map updating in which map data in the global range is collected by using a professional map data surveying and mapping device and a global map is constructed by using a full-amount construction method. Since the vehicle-end device and/or the roadside devices can collect road traffic information in real time, the data collection period is short. In addition, the regional map is updated, and then the global map is updated based on the updated regional map, so that a calculation cost of the updating can be reduced, the updating period is short, and the map instantaneity is high. In addition, based on the vehicle-road cooperation scene, diversified road traffic information is obtained from the vehicle-end devices and/or the roadside devices, the cost of map data collection can be reduced, and the difficulty and the cost of later updating, operation and maintenance of the map are reduced.

In an embodiment, the updated regional map includes a base layer updated according to road static information and/or road surrounding static information in the road traffic information.

Then, the core network device may update the base layer in the global map according to the updated base layer in the regional map.

In an embodiment, before the receiving the updated regional map sent by the one or more edge network devices, the method may further include:
constructing an initial global map;
sending, to the edge network device, a regional map corresponding to the jurisdiction area of the edge network device in the initial global map.

In the embodiments of the present application, when constructing the initial global map, the core network device adopts a traditional high-precision map modeling method, and with reference to FIG. 6, a process of the constructing is as follows:
1. A surveying and mapping device classifies and uploads surveying and mapping data to the core network device.
2. The core network device uses its own powerful computing power to perform data calculation and modeling.
3. After the modeling is completed, verification and calibration are performed.
4. The data is finally stored in the server.

In an embodiment, the method may further include:
updating the global map according to the road static information and/or road surrounding static information collected by the map data collection device;
sending, to the edge network device, a regional map corresponding to the jurisdiction area of the edge network device in the updated global map.

In other words, in the embodiments of the present application, not only the edge network device updates the regional map corresponding to the jurisdiction area of the edge network device based on the road traffic information collected by the vehicle-end device and/or the roadside device, and then reports the update to the core network device for performing the global map updating, but also the core network device further updates the global map based on the road static information and/or road surrounding static information collected by the professional map data collection device. The updating may be used as a supplement to the map updating performed based on the road traffic information collected by the vehicle-end devices and/or the roadside devices, and the accuracy and the comprehensiveness of map updating can be further improved. When the map is updated based on the road static information and/or road surrounding static information collected by the professional map data collection device, the map updating may not be based on full data in the global range.

In the embodiments of the present application, the core network device uniformly collects the base layers updated by various edge network devices, updates the global map in combination with the non-full map data (mainly including the road static information and/or road surrounding static information) collected by the professional map data collection device, and performs global map segmentation and issuing synchronization according to the jurisdiction area of each edge network device. Both the map on each edge network device and the map of the core network device are managed and controlled in a unified version, and are used as identifiers for the map updating, and the map has a version number in a segmentation grid. If the core network device finds that a map version is inconsistent during a periodic synchronization process, update synchronization is performed, and a version number chain is used as an upgrade standard.

In the embodiments of the present application, based on the characteristics of the map mass data and the map low-delay requirement and by using multiple levels of grids and distributing layer by layer, the initial global map and the global map updated according to the road traffic information collected by a vehicle-end device and/or a roadside device are gradually decomposed into the regional maps and the unit maps step by step according to a grid , and the regional maps and the unit maps are stored and distributed on the core network device, the edge network devices and the roadside devices respectively. As a result, the map distribution real-time performance and the scene application efficiency are greatly improved. The global map which is updated based on the updated regional map reported by the edge network device may not be issued to the edge network device.

In addition, global traffic situation analysis and related prediction decision information, such as a timing optimization suggestion for traffic signal lamps in a wide range, an overall situation of a urban traffic condition, a road traffic efficiency analysis, a bottleneck optimization strategy, and a travel suggestion may also be output by the core network device based on big data analysis and mining according to road traffic information, especially event information, collected by the vehicle-end device and/or the roadside device.

This embodiment of the present application provides a technical solution corresponding to the Embodiment 1, has the same application concept, and can achieve the same technical effect. More details of this embodiment may be obtained by referring to the Embodiment 1, and are not described herein again.

Referring to FIG. 7, FIG. 7 is a schematic flowchart of a map updating method according to Embodiment 3 of the present application. The method is applied to a roadside device, and includes the following step 71.

Step 71: sending, to the edge network device, the road traffic information collected by the vehicle-end devices and/or the roadside devices, so that the edge network device updates the regional map corresponding to the jurisdiction area of the edge network device according to the road traffic information.

According to the map updating method provided in the embodiments of the present application, the edge network device updates the regional map in the jurisdiction area of the edge network device according to the road traffic information collected by the vehicle-end device and/or the roadside devices, and reports the regional map to the core network device after the updating, and the core network device updates the global map based on the updated regional map, unlike conventional map updating in which map data in the global range is collected by using a professional map data surveying and mapping device and a global map is constructed by using a full-amount construction method. Since the vehicle-end device and/or the roadside devices can collect road traffic information in real time, the data collection period is short. In addition, the regional map is updated, and then the global map is updated based on the updated regional map, so that a calculation cost of the updating can be reduced, the updating period is short, and the map instantaneity is high. In addition, based on the vehicle-road cooperation scene, diversified road traffic information is obtained from the vehicle-end devices and/or the roadside devices, the cost of map data collection can be reduced, and the difficulty and the cost of later updating, operation and maintenance of the map are reduced in the embodiments of the present application.

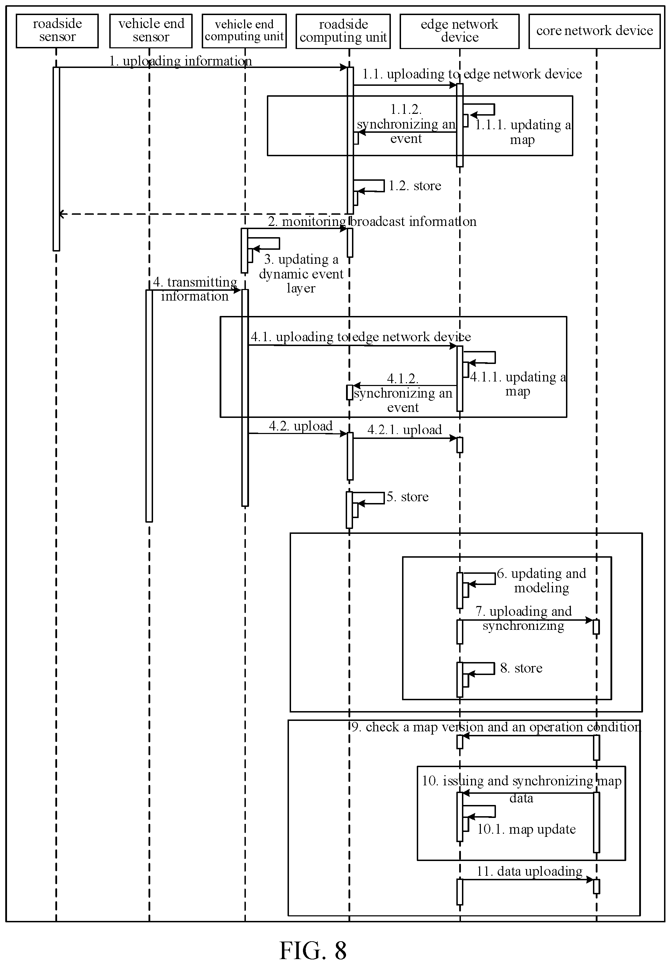

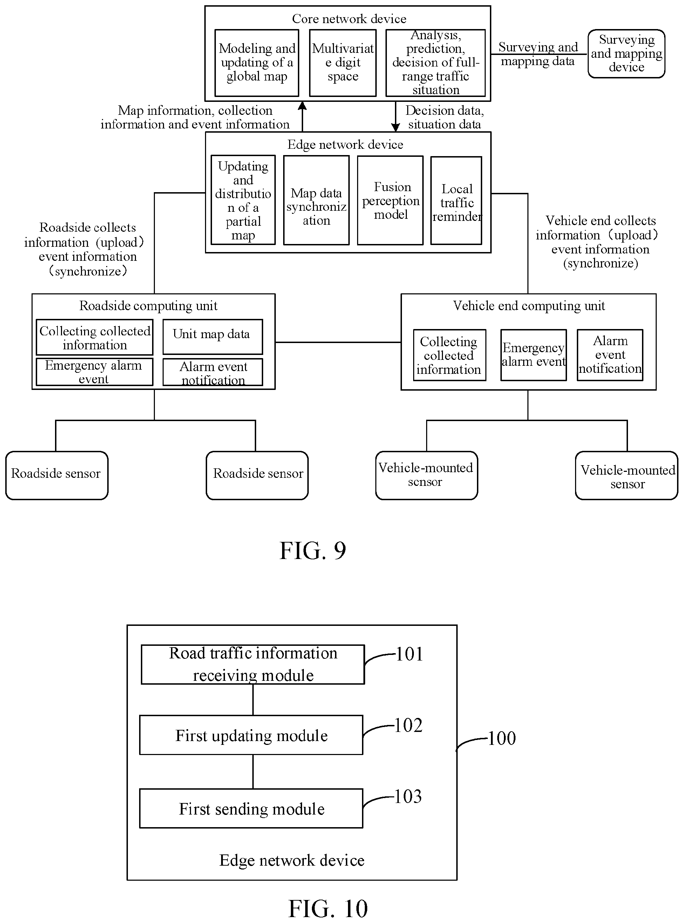

In practical application, referring to FIG. 8 and FIG. 9, the roadside device includes a roadside sensor (or referred to as a roadside sensing device) and a roadside computing unit, the roadside sensor is configured to collect the road traffic information and uploading the road traffic information to the roadside computing unit, the roadside computing unit is tightly connected to the edge network device, and the road traffic information can be immediately uploaded to the edge network device. The roadside computing unit is not only responsible for connecting to the roadside sensor, collecting information collected by the roadside sensor, but also being configured to process the information collected by the roadside sensor and/or information collected and reported by the vehicle-end device, generate an emergency event, distribute a synchronization and alarm event, and store and broadcast data of a unit map.

In addition, referring to FIG. 8 and FIG. 9, a vehicle-end device (which may also be referred to as a vehicle-mounted device) may also include a vehicle end sensor (or referred to as a vehicle-mounted sensing device) and a vehicle-mounted computing unit. The vehicle end sensor is configured to collect road traffic information and upload the road traffic information to the roadside computing unit, and the roadside computing unit immediately uploads the road traffic information to the edge network device. As an option, the vehicle-end device directly sends the collected road traffic information to the edge network device, this case can be applied to the situation where the road traffic information collected by the vehicle end sensor is event information. For example, the vehicle-mounted computing unit determines whether the road traffic information collected by the vehicle end sensor is the event information, and if yes, the vehicle-mounted computing unit directly sends the road traffic information to the edge network device without involvement of the roadside device. The vehicle-mounted computing unit is responsible for connecting a vehicle end sensor, collecting information collected by the vehicle end sensor, processing and generating an emergency event, and distributing a synchronization and alarm event.

The roadside sensor and the vehicle end sensor may specifically include a camera and/or a radar, etc.

In practical application, before the roadside device sends the road traffic information collected by the vehicle-end device and/or the roadside device to the edge network device, the roadside device may perform data pre-processing and merging processing on the collected road traffic information.

In an embodiment, the regional map includes an event layer. The method may further include:
receiving an updated event layer, where the updated event layer is obtained by updating, by the edge network device according to event information in road traffic information reported by a roadside device and/or a vehicle-end device in a jurisdiction area of the edge network device, the event layer in the regional map;
broadcasting the updated event layer to the vehicle-end device.

In the embodiments of the present application, the vehicle-end device monitors the event layer broadcast by the roadside device, and the event layer includes event information. In addition, after the event information broadcast by the roadside broadcast is monitored, the vehicle-end device may perform event marking in time.

In an embodiment, before the sending the road traffic information collected by the vehicle-end device and/or the roadside device to the edge network device, the method may further include:
receiving a unit map sent by the edge network device, where the unit map is a partial map corresponding to the jurisdiction area of the roadside device in a regional map corresponding to the jurisdiction area of the edge network device.

The regional map corresponding to the edge network device may be a partial map corresponding to the jurisdiction area of the edge network device in an initial global map constructed by the core network device.

In the embodiments of the present application, considering that the map data is related to high security requirement, map data transmission is performed between the core network device and the edge network device and between the edge network device and the roadside computing unit as much as possible using a private network or a virtual channel. In addition, the map data itself should also adopt a certain encryption policy and authentication mechanism to ensure data security.

The following illustrates the map updating method (referring to FIG. 8) and a map system architecture on which the map updating method is based provided by the embodiments of the present application (see FIG. 9). The map updating method according to some embodiments of the present application includes the following steps:
Step 1: road traffic information is collected by a roadside sensor and uploaded to a roadside computing unit.
Specifically, step 1 includes the following steps:
   Step 1.1: a roadside computing unit reports the road traffic information in step 1 to an edge network device.
   Step 1.1 includes the following steps:
      Step 1.1.1: if the road traffic information collected by the roadside sensor includes event information, the edge network device immediately updates the event layer in the regional map corresponding to the jurisdiction area of the edge network device;
      Step 1.1.2: the edge network device synchronizes the updated event layer to the roadside computing unit.
   Step 1.2: the roadside computing unit stores the updated event layer and broadcasts the updated event layer to a vehicle end (specifically a vehicle end computing unit).
Step 2: the vehicle end (specifically the vehicle end computing unit) monitors a broadcast of the roadside computing unit.
Step 3: after the updated event layer broadcast by the roadside computing unit is monitored by the vehicle end (specifically the vehicle end computing unit), the vehicle end updates the event layer.
Step 4: the vehicle end sensor collects road traffic information and uploads the road traffic information to the vehicle end computing unit.
Specifically, step 4 includes the following steps:
   Step 4.1: if the road traffic information collected by the vehicle end sensor includes event information, the vehicle end computing unit directly uploads the road traffic information collected by the vehicle end sensor to the edge network device.
   Step 4.1 includes the following steps:
      Step 4.1.1: the edge network device updates an event layer in a regional map corresponding to the jurisdiction area according to the road traffic information uploaded in step 4.1;
      Step 4.1.2: the edge network device synchronizes the updated event layer to the roadside computing unit.
   Step 4.2: If the road traffic information collected by the vehicle end sensor does not include the event information, the vehicle end computing unit uploads the road traffic information collected by the vehicle end sensor to the roadside computing unit.
   Step 4.2 includes the following steps:
      Step 4.2.1: the roadside computing unit uploads the road traffic information received in step 4.2 to the edge network device.
Step 5: the roadside computing unit stores the road traffic information received in step 4.2.
Step 6: if a condition of updating the base layer in the regional map is satisfied, for example, the update period is reached, the edge network device updates the base layer of the regional map in the jurisdiction area of the edge network device.
Step 7: the edge network device uploads the updated base layer to the core network device.
Step 8: the edge network device stores the updated base layer.
Step 9: the core network device checks the map version and an operation condition.
Step 10: if synchronization is required, the core network device issues and synchronizes map data.
Specifically, step 10 includes the following step:
   Step 10.1: the edge network device updates the map data according to the map data issued by the core network device.
Step 11: the edge network device uploads the updated map data to the core network device.

In summary, the embodiments of the present application provide a map updating method based on a vehicle-road cooperation scene and an edge computing system, which relate to a vehicle-road network cloud system structure. According to the embodiments of the present application, a map hierarchical architecture system constructed by fusion perception data collection, decision, analysis and modeling in a road-end and vehicle-end composite mode is used, side-cloud collaboration characteristics such as a low time delay and real-time calculation of end-side computing units (including a vehicle end computing unit and/or a roadside computing unit), area modeling and elastic calculation of an edge network device, and global modeling and overall situation analysis of a core network device can be effectively used, thereby optimizing a traditional method of map modeling and data distribution from top to bottom, and effectively improving real-time performance and distribution efficiency. Directed to the map mass data, adopting hierarchical collection, processing, storage and distribution strategies can effectively address the problems of storage difficulty, low distribution efficiency and the like of massive map data in a centralized mode. After the edge network device generates a partial map (i.e. a regional map), map data distribution can be quickly and timely performed to the area where the edge network device is located. Compared with the traditional mode, the degree, accuracy and instantaneity of matching the map with the actual road information are higher; and in combination with the vehicle-road cooperation and fusion sensing technology, the real-time road condition information can be effectively collected on the end side, the area and the unit layer are updated based on a priority increment and are fed back to the road end and the vehicle end in time, real-time map data are synchronized, and a more accurate, intelligent and efficient map service is provided. By utilizing the edge computing system framework, the problem of real-time performance and effectiveness of storage, distribution and updating of traditional high-precision map data are effectively solved, and a foundation is laid for application practice of a high-precision map in a wide-area range.

According to the embodiments of the present application, the respective advantages of the core network device and the edge nodes are fully exerted on the basis of edge-cloud collaboration, and compared with the traditional solution, not only the application level of the edge computing architecture is deepened, but also the collection diversification of the map and the road information is realized, and the map generation mechanism also implements the policy of concentrating the edges to the core.

The map updating methods provided by the embodiments of the invention can be suitable for updating a high-precision map, the high-precision map has higher precision and more dimensions compared with a traditional electronic navigation map, the precision is higher because a map precision of the high-precision map is a centimeter level, and the dimension more lies in that the map includes surrounding static information related to traffic in addition to road information.

The solutions provided in the embodiments of the present application can be widely applied to the fields of smart transportation and surveying and mapping, provide real-time, high-precision and diversified information map service support for scenes such as vehicle monitoring and automatic driving, and provide rigid input for real-time road condition determination and driving behavior decision-making of a self-driving car, thereby ensuring driving safety and efficiency.

Referring to FIG. 10, FIG. 10 is a schematic structural diagram of an edge network device according to Embodiment 4 of the present application, the edge network device 100 includes:
a road traffic information receiving module 101 configured to receive road traffic information collected and sent by one or more vehicle-end devices and/or one or more roadside devices;
a first updating module 102 configured to update a regional map corresponding to a jurisdiction area of the edge network device according to the road traffic information;
a first sending module 103 configured to send the updated regional map to a core network device and/or one or more roadside devices in the jurisdiction area of the edge network device.

In an embodiment, the first updating module 102 includes:
a first updating unit configured to update a base layer in the regional map according to road static information and/or road surrounding static information in the road traffic information.

In an embodiment, the first updating module 102 includes:
a second updating unit, configured to update an event layer in the regional map according to event information in the road traffic information.

In an embodiment, the edge network device 100 further includes:
a second receiving module, configured to receive a regional map corresponding to the jurisdiction area of the edge network device sent by the core network device;
a first distribution module, configured to send a unit map corresponding to a jurisdiction area of a roadside device in the regional map to the roadside device.

In an embodiment, the edge network device 100 further includes:
a third receiving module, configured to receive a regional map corresponding to the jurisdiction area of the edge network device sent by the core network device after the core network device updates the global map according to the road static information and/or the road surrounding static information collected by a map data collection device.

The embodiment of the present application is a product embodiment corresponding to the foregoing method embodiment 1, and therefore, details are not described herein again and may be obtained by referring to the above Embodiment 1.

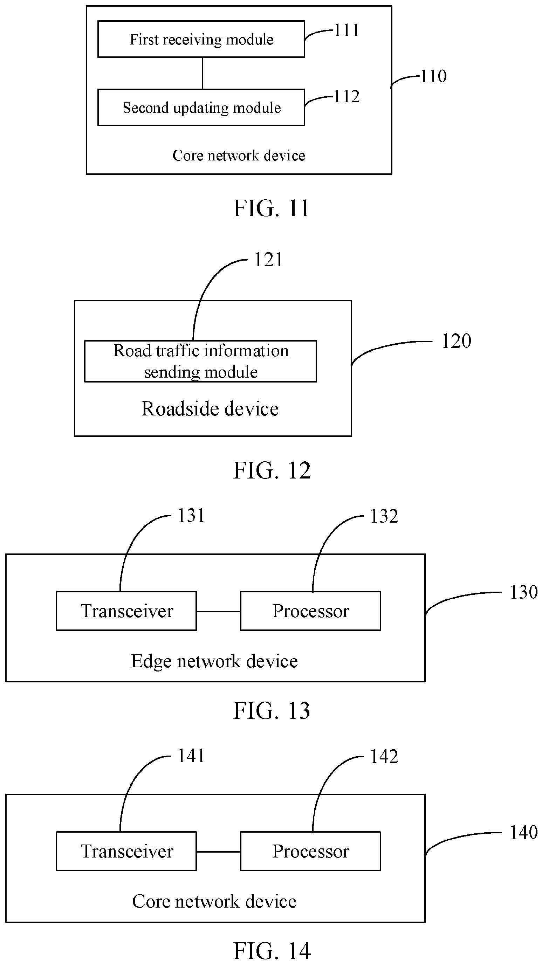

Referring to FIG. 11, FIG. 11 is a schematic structural diagram of a core network device according to Embodiment 5 of the present disclosure, and the core network device 110 includes:
a first receiving module 111 configured to receive one or more updated regional maps sent by one or more edge network devices, where each regional map is a map corresponding to a jurisdiction area of the edge network device, and the updated regional map is updated according to road traffic information collected and sent by the vehicle-end devices and/or the roadside devices;
a second updating module 112 configured to update the global map according to the received updated regional map.

In an embodiment, the updated regional map includes a base layer updated according to road static information and/or road surrounding static information in the road traffic information.

In an embodiment, the core network device 110 further includes:
an initial construction module configured to construct an initial global map.

In an embodiment, the core network device 110 further includes:
a third updating module, configured to update the global map according to the road static information and/or road surrounding static information collected by the map data collection device;
a third distribution module, configured to send, to the edge network device, a regional map corresponding to the jurisdiction area of the edge network device in the updated global map.

The embodiment of the present application is a product embodiment corresponding to the method Embodiment 2, and therefore, details are not described herein again and may be obtained by referring to the above-mentioned Embodiment 2.

Referring to FIG. 12, FIG. 12 is a schematic structural diagram of a roadside device according to Embodiment 6 of the present application, and the roadside device 120 includes:
a road traffic information sending module 121, configured to send, to the edge network device, the road traffic information collected by the vehicle-end devices and/or the roadside devices, so that the edge network device updates the regional map corresponding to the jurisdiction area of the edge network device according to the road traffic information.

In an embodiment, the regional map includes an event layer, and the roadside device 120 further includes:
a fourth receiving module, configured to receive an updated event layer, where the updated event layer is obtained by updating, by the edge network device according to event information in road traffic information reported by a roadside device and/or a vehicle-end device in a jurisdiction area of the edge network device, the event layer in the regional map;
a broadcast module, configured to broadcast the updated event layer to the vehicle-end device.

In an embodiment, the roadside device 120 further includes:
a fifth receiving module, configured to receive a unit map sent by the edge network device, where the unit map is a partial map corresponding to the jurisdiction area of the roadside device in a regional map corresponding to the jurisdiction area of the edge network device.

The embodiment of the present application is a product embodiment corresponding to the foregoing method Embodiment 3, and therefore, details are not described herein again and may be obtained by referring to Embodiment 3.

Referring to FIG. 13, FIG. 13 is a schematic structural diagram of an edge network device according to Embodiment 7 of the present application, the edge network device 130 comprising: a transceiver 131 and a processor 132;
the transceiver 131 is configured to receive road traffic information collected and sent by one or more vehicle-end devices and/or one or more roadside devices;
the processor 132 is configured to update a regional map corresponding to a jurisdiction area of the edge network device according to the road traffic information;
the transceiver 131 is further configured to send the updated regional map to a core network device and/or a roadside device in the jurisdiction area of the edge network device..

In an embodiment, the processor 132 is configured to update a base layer in the regional map according to the road static information and/or the road surrounding static information in the road traffic information.

In an embodiment, the processor 132 is configured to update an event layer in the regional map according to the event information in the road traffic information.

In an embodiment, the transceiver 131 is further configured to receive a regional map corresponding to the jurisdiction area of the edge network device sent by the core network device; the transceiver 131 is further configured to send a unit map corresponding to a jurisdiction area of the roadside device in the regional map to the roadside device.

In an embodiment, the transceiver 131 is further configured to receive a regional map corresponding to the jurisdiction area of the edge network device sent by the core network device after the core network device updates the global map according to the road static information and/or road surrounding static information collected by the map data collection device.

The embodiment of the present application is a product embodiment corresponding to the foregoing method Embodiment 1, and therefore, details are not described herein again and may be obtained by referring to the above Embodiment 1.

Referring to FIG. 14, FIG. 14 is a schematic structural diagram of a core network device according to Embodiment 8 of the present application, the core network device 140 includes a transceiver 141 and a processor 142;
the transceiver 141 is configured to receive one or more updated regional maps sent by one or more edge network devices, where each regional map is a map corresponding to a jurisdiction area of the edge network device, and the updated regional map is updated according to road traffic information collected and sent by one or more vehicle-end devices and/or one or more roadside devices;
the processor 142 is configured to update the global map according to the one or more received updated regional maps.

In an embodiment, the updated regional map includes a base layer updated according to road static information and/or road surrounding static information in the road traffic information.

In an embodiment, the processor 142 is further configured to construct an initial global map;
the transceiver 141 is further configured to send, to the edge network device, a regional map corresponding to the jurisdiction area of the edge network device in the initial global map.

The processor 142 is further configured to update the global map according to the road static information and/or road surrounding static information collected by the map data collection device;
the transceiver 141 is further configured to send, to the edge network device, a regional map corresponding to the jurisdiction area of the edge network device in the updated global map.

The embodiment of the present application is a product embodiment corresponding to the method Embodiment 2, and therefore, details are not described herein again and may be obtained by referring to the Embodiment 2.

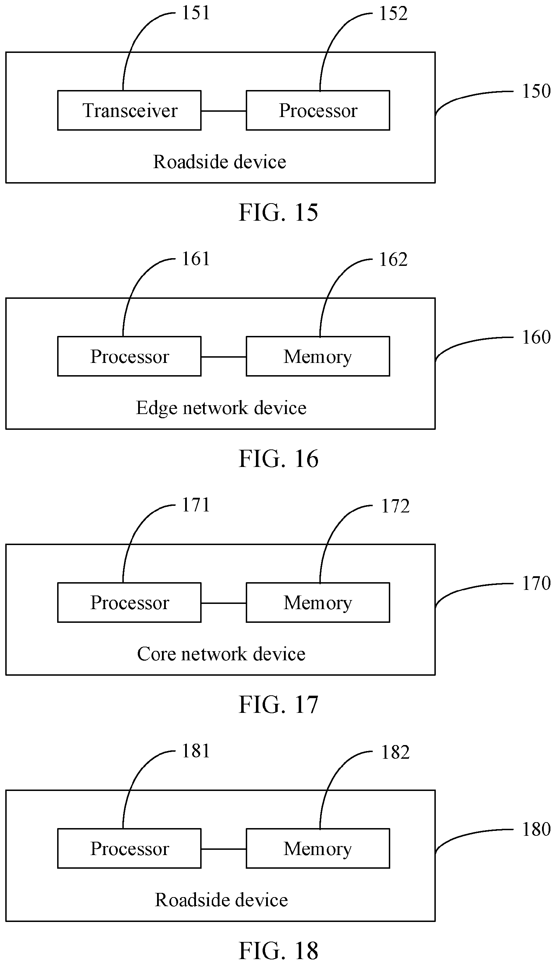

Referring to FIG. 15, FIG. 15 is a schematic structural diagram of a roadside device according to Embodiment 9 of the present application, the roadside device 150 comprising: a transceiver 151 and a processor 152;
the transceiver 151 is configured to send, to the edge network device, the road traffic information collected by the vehicle-end devices and/or the roadside devices, so that the edge network device updates the regional map corresponding to the jurisdiction area of the edge network device according to the road traffic information.

In an embodiment, the regional map includes an event layer; the transceiver 151 is further configured to receive an updated event layer, where the updated event layer is obtained by updating, by the edge network device according to event information in road traffic information reported by a roadside device and/or a vehicle-end device in a jurisdiction area of the edge network device, the event layer in the regional map;
the transceiver 151 is further configured to broadcast the updated event layer to the vehicle-end device.

In an embodiment, the transceiver 151 is further configured to receive a unit map sent by the edge network device, where the unit map is a partial map corresponding to the jurisdiction area of the roadside device in a regional map corresponding to the jurisdiction area of the edge network device.

The embodiment of the present application is a product embodiment corresponding to the foregoing method Embodiment 3, and therefore, details are not described herein again and may be obtained by referring to Embodiment 3.

Referring to FIG. 16, FIG. 16 is a schematic structural diagram of an edge network device provided by Embodiment 10 of the present application, where the edge network device 160 includes a processor 161, a memory 162, and a program stored on the memory 162 and executable by the processor 161. When the processor 161 executes the program, the processor 161 implements following steps:
receiving road traffic information collected and sent by one or more vehicle-end devices and/or one or more roadside devices;
updating a regional map corresponding to a jurisdiction area of the edge network device according to the road traffic information;
sending the updated regional map to a core network device and/or a roadside device in the jurisdiction area of the edge network device.

In an embodiment, the processor 161 may further implement the following step when executing the program:
updating a base layer in the regional map according to the road static information and/or the road surrounding static information in the road traffic information.

In an embodiment, the processor 161 may further implement the following step when executing the program:
updating an event layer in the regional map according to the event information in the road traffic information.

In an embodiment, the processor 161 may further implement the following steps when executing the program:
receiving a regional map corresponding to the jurisdiction area of the edge network device sent by the core network device, before receiving the road traffic information collected and sent by one or more vehicle-end devices and/or one or more roadside devices;
sending a unit map corresponding to a jurisdiction area of the roadside device in the regional map to the roadside device.

In an embodiment, the processor 161 may further implement the following step when executing the program:
receiving a regional map corresponding to the jurisdiction area of the edge network device sent by the core network device after the core network device updates the global map according to the road static information and/or road surrounding static information collected by the map data collection device.

The specific working process of this embodiment of the present application is consistent with the foregoing method Embodiment 1, and details are not described herein again. Please refer to the detailed description of the method steps in the foregoing Embodiment 1.

Referring to FIG. 17, FIG. 17 is a schematic structural diagram of a core network device according to Embodiment 11 of the present application. The core network device 170 includes a processor 171, a memory 172, and a program stored on the memory 172 and executable by the processor 171. When the processor 171 executes the program, the processor 171 implements following steps:
receiving one or more updated regional maps sent by one or more edge network devices, where each regional map is a map corresponding to a jurisdiction area of the edge network device, and the updated regional map is updated according to road traffic information collected and sent by one or more vehicle-end devices and/or one or more roadside devices;
updating the global map according to the one or more received updated regional maps.

In an embodiment, the updated regional map includes a base layer updated according to road static information and/or road surrounding static information in the road traffic information.

In an embodiment, the processor 171 may further implement the following steps when executing the program:
before receiving the one or more updated regional maps sent by the one or more edge network devices, constructing an initial global map;
sending, to the edge network device, a regional map corresponding to the jurisdiction area of the edge network device in the initial global map.

In an embodiment, the processor 171 may further implement the following steps when executing the program:
updating the global map according to the road static information and/or road surrounding static information collected by the map data collection device;
sending, to the edge network device, a regional map corresponding to the jurisdiction area of the edge network device in the updated global map.

The specific working process of this embodiment of the present application is consistent with the foregoing method Embodiment 2, and details are not described herein again. Please refer to the detailed description of the method steps in the foregoing Embodiment 2.

Referring to FIG. 18, FIG. 18 is a schematic structural diagram of a roadside device according to Embodiment 12 of the present application, where the roadside device 180 includes a processor 181, a memory 182, and a program stored on the memory 182 and executable by the processor 181. When the processor 181 executes the program, the processor 181 implements the following step:
sending, to the edge network device, the road traffic information collected by the vehicle-end devices and/or the roadside devices, so that the edge network device updates the regional map corresponding to the jurisdiction area of the edge network device according to the road traffic information.

In an embodiment, the regional map includes an event layer, and the processor 181 may further implement the following steps when executing the program:
receiving an updated event layer, where the updated event layer is obtained by updating, by the edge network device according to event information in road traffic information reported by a roadside device and/or a vehicle-end device in a jurisdiction area of the edge network device, the event layer in the regional map;
broadcasting the updated event layer to the vehicle-end device.

In an embodiment, the processor 181 may further implement the following steps when executing the program:
before sending, to the edge network device, the road traffic information collected by the vehicle-end device and/or the roadside device, receiving a unit map sent by the edge network device, where the unit map is a partial map corresponding to the jurisdiction area of the roadside device in a regional map corresponding to the jurisdiction area of the edge network device.

The specific working process of this embodiment of the present application is consistent with the foregoing method Embodiment 3, and details are not described herein again. Please refer to the detailed description of the method steps in the foregoing Embodiment 3.

Embodiment 13 of the present application provides a readable storage medium, on which a program is stored, and when the program is executed by a processor, steps in any one of the above Embodiments 1 to 3 are implemented. Please refer to the description of the method steps in the above Embodiments for details.

The readable storage medium includes a computer readable storage medium. Computer readable storage media include permanent, non-permanent, removable and non-removable media, information storage may be implemented by any method or technique. The information may be a computer-readable instruction, a data structure, a program module, or other data. Examples of storage media include, but are not limited to, a phase change memory (PRAM), a static random access memory (SRAM), a dynamic random access memory (DRAM), other types of random access memory (RAM), read-only memory (ROM), an electrically erasable programmable read-only memory (EEPROM), a flash memory or other memory technology, a read only memory (CD-ROM), a digital versatile disc (DVD) or other optical storage, a magnetic cassette tape, magnetic tape magnetic disk storage or other magnetic storage device, or any other non-transmission medium, which may be used to store information that can be accessed by a computing device.

The above describes optional embodiments of the present application, and it should be noted that several improvements and modifications can be made by a person of ordinary skill in the art without departing from the principle of the present application, and these improvements and modifications should also be regarded as the protection scope of the present application.

## Claims

1. A map updating method performed by an edge network device, comprising:
receiving road traffic information collected and sent by one or more vehicle-end devices and/or one or more roadside devices;
updating a regional map corresponding to a jurisdiction area of the edge network device according to the road traffic information;
sending the updated regional map to a core network device and/or one or more roadside devices in the jurisdiction area of the edge network device.

2. The method according to claim 1, wherein updating the regional map corresponding to the jurisdiction area of the edge network device according to the road traffic information comprises:
updating a base layer in the regional map according to road static information and/or road surrounding static information in the road traffic information.

3. The method according to claim 1 or 2, wherein updating the regional map corresponding to the jurisdiction area of the edge network device according to the road traffic information comprises:
updating an event layer in the regional map according to event information in the road traffic information.

4. The method according to claim 1, wherein before receiving the road traffic information collected and sent by the one or more vehicle-end devices and/or the one or more roadside devices, the method further comprises:
receiving a regional map, corresponding to the jurisdiction area of the edge network device, sent by a core network device;
sending a unit map, in the regional map, corresponding to a jurisdiction area of a roadside device to the roadside device.

5. The method according to claim 4, wherein the method further comprises:
receiving a regional map, corresponding to the jurisdiction area of the edge network device, sent by the core network device after the core network device updates a global map according to road static information and/or road surrounding static information collected by a map data collection device.

6. A map updating method performed by a core network device, comprising:
receiving one or more updated regional maps sent by one or more edge network devices, wherein each regional map is a map corresponding to a jurisdiction area of one of the one or more edge network devices, and the one or more updated regional maps are updated according to road traffic information collected and sent by one or more vehicle-end devices and/or one or more roadside devices;
updating a global map according to the received one or more updated regional maps.

7. The method according to claim 6, wherein at least one of the one or more updated regional maps comprises a base layer updated according to road static information and/or road surrounding static information in the road traffic information.

8. The method according to claim 6, wherein before receiving the one or more updated regional maps sent by the one or more edge network devices, the method further comprises:
constructing an initial global map;
sending a regional map, in the initial global map, corresponding to a jurisdiction area of an edge network device to the edge network device.

9. The method according to claim 6, wherein the method further comprises:
updating the global map according to road static information and/or road surrounding static information collected by a map data collection device;
sending a regional map, in the updated global map, corresponding to a jurisdiction area of an edge network device to the edge network device.

10. A map updating method performed by a roadside device, comprising:
sending, to an edge network device, road traffic information collected by one or more vehicle-end devices and/or the roadside device, wherein the edge network device updates a regional map corresponding to a jurisdiction area of the edge network device according to the road traffic information.

11. The method according to claim 10, wherein the regional map comprises an event layer, the method further comprises:
receiving an updated event layer, wherein the updated event layer is obtained by updating the event layer in the regional map by the edge network device according to event information in the road traffic information reported by one or more roadside devices and/or one or more vehicle-end devices in a jurisdiction area of the edge network device;
broadcasting the updated event layer to one or more vehicle-end devices.

12. The method according to claim 10, wherein before sending, to the edge network device, the road traffic information collected by the one or more vehicle-end devices and/or the roadside device, the method further comprises:
receiving a unit map sent by the edge network device, wherein the unit map is a partial map corresponding to a jurisdiction area of the roadside device in the regional map corresponding to the jurisdiction area of the edge network device.

13. An edge network device, comprising:
a road traffic information receiving module, configured to receive road traffic information collected and sent by one or more vehicle-end devices and/or one or more roadside devices;
a first updating module, configured to update a regional map corresponding to a jurisdiction area of the edge network device according to the road traffic information;
a first sending module, configured to send the updated regional map to a core network device and/or one or more roadside devices in the jurisdiction area of the edge network device.

14. A core network device, comprising:
a first receiving module, configured to receive one or more updated regional maps sent by one or more edge network devices, wherein each regional map is a map corresponding to a jurisdiction area of one of the one or more edge network devices, and the one or more updated regional maps are updated according to road traffic information collected and sent by one or more vehicle-end devices and/or one or more roadside devices;
a second updating module, configured to update a global map according to the received one or more updated regional maps.

15. A roadside device, comprising:
a road traffic information sending module, configured to send, to an edge network device, road traffic information collected by one or more vehicle-end devices and/or the roadside device, wherein the edge network device updates a regional map corresponding to a jurisdiction area of the edge network device according to the road traffic information.

16. An edge network device, comprising:
a transceiver and a processor,
wherein the transceiver is configured to receive road traffic information collected and sent by one or more vehicle-end devices and/or one or more roadside devices;
the processor is configured to update a regional map corresponding to a jurisdiction area of the edge network device according to the road traffic information;
the transceiver is further configured to send the updated regional map to a core network device and/or one or more roadside devices in the jurisdiction area of the edge network device.

17. A core network device, comprising:
a transceiver and a processor;
wherein the transceiver is configured to receive one or more updated regional maps sent by one or more edge network devices, wherein each regional map is a map corresponding to a jurisdiction area of one of the one or more edge network devices, and the one or more updated regional maps are updated according to road traffic information collected and sent by one or more vehicle-end devices and/or one or more roadside devices;
the processor is configured to update a global map according to the received one or more updated regional maps.

18. A roadside device, comprising:
a transceiver and a processor, wherein the transceiver is configured to send, to an edge network device, road traffic information collected by one or more vehicle-end devices and/or the roadside device, wherein the edge network device updates a regional map corresponding to a jurisdiction area of the edge network device according to the road traffic information.

19. An edge network device, comprising:
a memory, a processor, and a program stored on the memory and executable by the processor, wherein the processor implements steps in the map updating method according to any one of claims 1-5 when executing the program.

20. A core network device, comprising:
a memory, a processor, and a program stored on the memory and executable by the processor, wherein the processor implements the steps in the map updating method according to any one of claims 6 to 9 when executing the program.

21. A roadside device, comprising:
a memory, a processor, and a program stored on the memory and executable by the processor, wherein the processor implements the steps in the map updating method according to any one of claims 10-12 when executing the program.

22. A readable storage medium, wherein a program is stored on the readable storage medium, wherein when the program is executed by a processor, the steps in the map updating method according to any one of claims 1 to 9 are implemented.
